# EUROPÄISCHE PATENTSCHRIFT

(11) **EP 1 404 499 B1**
(45) Veröffentlichungstag und Bekanntmachung des Hinweises auf die Patenterteilung: **31.10.2012**
(21) Anmeldenummer: 02782440.8
(22) Anmeldetag: 18.06.2002
(51) Int. Cl.: B28C 5/46, C04B 22/00, C04B 40/06

(54) **VERFAHREN UND VORRICHTUNG ZUM KÜHLEN VON STOFFGEMISCHEN MITTELS UNTERKÜHLTEM WASSEREIS**
METHOD AND DEVICE FOR COOLING A MIXTURE OF SUBSTANCES BY WAY OF SUBCOOLED WATER ICE
PROCEDE ET DISPOSITIF POUR REFROIDIR DES MELANGES DE SUBSTANCES AU MOYEN DE GLACE HYDRIQUE SURREFROIDIE

(30) Priorität: 30.06.2001 DE 10131838
(43) Veröffentlichungstag der Anmeldung: 07.04.2004
(73) Patentinhaber: Air Liquide Deutschland GmbH, 40235 Düsseldorf (DE); Messer Group GmbH, 65812 Bad Soden (DE); Max Boegl Bauunternehmung GmbH & Co. KG, 92301 Neumarkt (DE)
(72) Erfinder: LINDNER, Erich, 91275 Aucherbach (DE); REICHEL, Dieter, 92318 Neumarkt (DE); TAUCHMANN, Jens, 47269 Duisburg (DE); WEICHMANN, Thomas, 92367 Pilsach (DE)
(74) Vertreter: Kahlhöfer, Hermann
(86) Internationale Anmeldenummer: PCT/EP2002/006711
(87) Internationale Veröffentlichungsnummer: WO 2003/004234

(56) Entgegenhaltungen:
- DE-A- 3 331 110
- DE-A- 19 731 052
- PATENT ABSTRACTS OF JAPAN vol. 2000, no. 18, 5. Juni 2001 (2001-06-05) & JP 01 052958 A (OHBAYASHI CORP;OSAKA GAS CO LTD), 1. März 1989 (1989-03-01)

## Beschreibung

Die Erfindung betrifft ein Verfahren sowie eine Vorrichtung zum Kühlen von Stoffgemischen, bekannt beispielweise aus DE-A-3331110.

Im weiten Bereichen, etwa der Herstellung von Beton oder der Herstellung von Wirkstoffgemischen, ist es erforderlich, eine aufgrund chemischer, biologischer oder physikalischer Vorgänge im Gemisch hervorgerufene Wärmeentwicklung zu begrenzen, um Schäden zu vermeiden.

So ist es im Bereich der Betonherstellung für viele Anwendungen üblich, gekühlten Frischbeton einzusetzen. Hierdurch kann die bei der Hydration des Zements freiwerdende Wärme besser kompensiert und gleichmäßiger abgeführt und so Spannungsdifferenzen im Beton vermieden werden. Außerdem ist die Verarbeitung von ungekühltem Frischbeton bei Außentemperaturen über 25°C problematisch, da die bei derart hohen Außentemperaturen resultierende Peaktemperatur des Betons beim Abbinden oberhalb von 60°C liegen und somit zu Festigkeitsverlusten führen kann. Durch die Kühlung wird das Überschreiten diese Grenze vermieden.

Zur Herstellung von gekühltem Frischbeton ist es bekannt, den bereits fertig angemachten Frischbeton durch Zugabe von Scherbeneis im stationären oder mobilen Mischer oder in der rotierenden Trommel eines Betontransportfahrzeugs auf die gewünschte Temperatur zu kühlen. Zwecks Erhöhung der Kühlwirkung wird zudem in der EP 0 124 724 A1 vorgeschlagen, das Scherbeneis durch ein Bad aus flüssigem Stickstoff zu führen, um das Eis so zu unterkühlen.

Bei der Zugabe von Scherbeneis besteht jedoch die Gefahr von Inhomogenitätserscheinungen infolge von Wassereinschlüssen im Beton. Weiterhin ist das Scherbeneis nicht gut löslich, und es kommt zu einer Verlängerung der Mischzeiten, was insbesondere in den Mischwerken zu erheblichen Verringerung der Produktionsleistung führt.

Als Alternative wurde die Zugabe von flüssigem Stickstoff (LN₂) in den Mischer vorgeschlagen. Nachteilig hierbei ist jedoch, dass dieses Verfahren nur einen geringen Wirkungsgrad besitzt, da verhältnismäßig große Mengen LN₂ innerhalb kurzer Zeit in die jeweilige Charge eingetragen werden müssen, um den gewünschten Abkühleffekt zu erreichen.

Aus der DE 197 31 052 A1 ist ein Verfahren zur Herstellung von Eispartikeln für den Einsatz beim Kühlen von Beton bekannt geworden, bei dem Wasser mittels einer Sprühdüse oder einer Wasserbrause in ein Bad aus flüssigem Stickstoff eingesprüht wird. Das Wasser gefriert im Stickstoff zu kleinen Eisteilchen, die in dosierter Menge der trockenen Betonmischung zugegeben und mit dieser innig durchmischt werden. Hierbei lässt sich jedoch die Temperatur der erzeugten Eisteilchen nur schwer kontrollieren. Eis weist selbst bei Temperaturen von einigen Graden unter 0°C noch einen gewissen Restfeuchtigkeitsgehalt auf, aufgrund dessen die Gefahr einer Verklebung der Eisteilchen vor ihrer Zuführung an das trockene Stoffgemisch besteht.

Aus der DE 33 31 110 A1 ist ein Verfahren zur Herstellung von Formkörpern mit kalziumsulfathaltigen Bindemitteln bekannt, bei dem Abbindewasser in Form von Eiskristallen zugeführt wird oder diese erzeugt werden.

Aufgabe der vorliegenden Erfindung ist daher, ein Verfahren sowie eine Vorrichtung zur Kühlen von Stoffgemischen mittels Wassereis anzugeben, durch das bzw. die die Nachteile der vorbekannten Kühlverfahren vermieden werden und eine effiziente Kühlungsmöglichkeit von Stoffgemischen ohne eine Minderung der Produktqualität bereitgestellt wird.

Gelöst ist diese Aufgabe zum einen durch ein Verfahren mit den Merkmalen des Patentanspruchs 1, zum anderen durch eine Vorrichtung mit den Merkmalen des Anspruchs 9.

Beim erfindungsgemäßen Verfahren wird also einem Stoffgemisch, bestehend aus einem Ausgangsstoff, bei dem es sich um einen pharmazeutischen Wirkstoff, ein Lebensmittel oder um ein Bindemittel, wie etwa Zement, handeln kann, und entsprechenden Zuschlagsstoffen, wie beispielsweise - im pharmazeutischen oder lebensmitteltechnischen Bereich -Treibmitteln oder Mitteln zur Haltbarmachung, oder - im Bereich der Betonherstellung - Kies, Sand, Flugasche u. dergl., Wasser zugesetzt. Dieses Wasser wird jedoch nicht, wie üblich, in flüssiger Form, sondern in Form eines zuvor erzeugten, aus Schnee- und/oder Eiskristallen bestehenden Kälteträgers zugeführt. Die Schnee- und/oder Eiskristalle des Kälteträgers werden dabei vor ihrer Zuführung an das Stoffgemisch unterkühlt und einem Verfahren zur Vereinzelung unterzogen. Hierdurch wird die Gefahr eines Zusammenklebens der Schnee- oder Eiskristalle des Kälteträgers vermindert und so Inhomogenitätserscheinungen im Stoffgemisch, die durch Wassereinschlüsse hervorgerufen werden, wirkungsvoll vermieden.

Erfindungsgemäß ergeben sich bei einer Unterkühlung auf eine Temperatur von weniger als minus 40°C besonders gute Transporteigenschaften der erzeugten Kristalle, da bei dieser Temperatur keine Bereiche flüssigen Wassers an der Kristalloberfläche mehr vorliegen. Bevorzugte Treibmittel sind etwa Luft oder Stickstoff, bevorzugte Kühlmittel sind Flüssiggase, wie flüssiges Kohlendioxid oder Stickstoff.

Als bevorzugtes Verfahren zur Vereinzelung ist die Zuführung der Eis- und/oder Schneekristalle des Kälteträgers an einen Kaltgasstrom vorgesehen. Dieser Kaltgasstrahl weist eine Temperatur auf, die deutlich unterhalb der Gefriertemperatur von Wassers, bevorzugt auf der Temperatur der erzeugten Schnee- und/oder Eiskristalle liegt. Durch den Kaltgasstrom werden die Schnee- und/oder Eiskristalle wirkungsvoll vereinzelt, die Verklebung von Eis- bzw. Schneekristallen unterdrückt und bereits aneinander haftende Kristalle getrennt. Die tiefe Temperatur des Kaltgasstromes verhindert die Bildung von flüssigem Oberflächenwasser auf den Schnee- und/oder Eiskristallen, die das Verkleben der Schnee- und/oder Eiskristalle fördern könnten. Beim Einsatz eines trockenen Gases, wie etwa kalter Stickstoff wird zudem der Eintrag von unerwünschter Feuchtigkeit unterbunden.

Alternativ oder ergänzend zur Vereinzelung mittels eines Kaltgesstrahles können mit Vorteil auch mechanische Einrichtungen zur Vereinzelung eingesetzt werden. Hierzu gehören etwa Vibratoren, Zyklone, Sichter oder Siebe.

Ein besonders vorteilhaftes Verfahren zur Bildung der Schnee- und/oder Eiskristalle sieht vor, Wasser mit einem Treibgas sowie mit einem Kühlmittel zu einem Kaltgasgemisch zu vermengen und das Kaltgasgemisch in eine Sprühkammer einzusprühen. Das im Kaltgasstrahl vorliegende Wasser gefriert in der kalten Atmosphäre der Sprühkammer zu Eiskristallen, die in der Folge einem Stoffgemisch zur Herstellung von Frischbeton beigemengt werden. Zugleich tritt bei einer adiabatischen Entspannung des Kaltgasgemisches beim Einsprühen in die Sprühkammer ein zusätzlicher Kühleffekt auf. Die auf diese Weise hergestellten Eiskristalle sind klein und weisen eine im Vergleich zu anderen Herstellungsverfahren für Eisteilchen große Oberfläche auf. Die genaue Größe der Eiskristalle, ihre Temperatur und Oberflächenbeschaffenheit wird maßgeblich von der Zusammensetzung des Kaltgases und der Temperatur des Kaltgasstrahls bestimmt.

Ein alternatives oder ergänzend zum vorgenannten Verfahren einsetzbares Verfahren zur Herstellung der Schnee- und/oder Eiskristalle macht von der in der DE 197 312 052 A1 beschriebenen Lehre Gebrauch. Dabei wird Wasser in Form feiner Tröpfchen in ein Bad aus einem Kühlmittel, beispielsweise flüssiger Stickstoff, eingesprüht. Das Wasser gefriert dabei unverzüglich zu kleinen Eisteilchen, die bereits sehr gute Transporteigenschaften aufweisen.

Um die Zieltemperatur des Stoffgemisches bzw. des Produkts schnell zu erreichen, wird der in der Sprühkammer erzeugte Kälteträger einer Nachkühlung unterzogen. Bei Wahl eines geeigneten Kühlmittels, etwa flüssiger Stickstoff, lassen sich so Schnee-/Eiskristalltemperaturen von bis zu -193°C erzeugen. Als bevorzugtes Kühlmittel für die Nachkühlung kommt ein tiefkaltes, verflüssigtes Gas zum Einsatz. Unter Umwelt- und Wirtschaftlichkeitsaspekten empfehlen sich hierbei insbesondere Stickstoff oder Kohlendioxid. Die Nachkühlung kann vor, während und/oder zugleich mit dem Verfahren zur Vereinzelung erfolgen.

Die erfindungsgemäße Vorrichtung ist gemäß Anspruch 9 ausgebildet.

Zweckmäßigerweise umfasst die Vorrichtung zur Vereinzelung der Schnee- und/oder Eiskristalle eine Kaltgasstrom-Erzeugungseinrichtung. Alternativ hierzu kann aber auch eine mechanische Separieranlage zum Einsatz kommen.

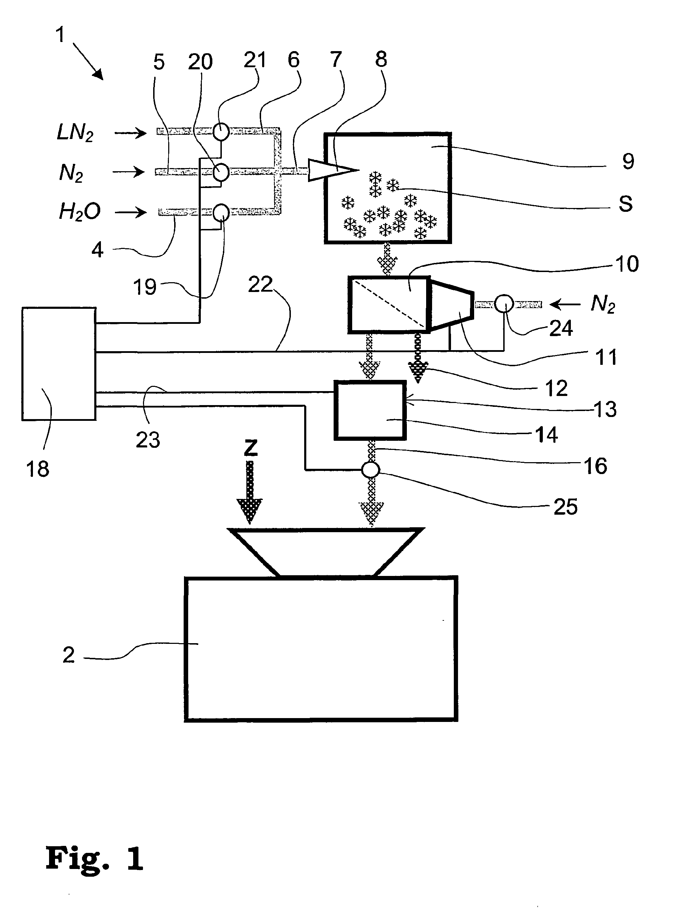

Die einzige Zeichnung (Fig. 1) zeigt schematisch eine erfindungsgemäße Vorrichtung zum Erzeugen von Frischbeton.

Die Vorrichtung 1 weist eine an sich bekannte Mischkammer 2 auf, in der die zur Herstellung von Frischbeton erforderlichen Zuschlagstoffe, wie Sand, Kies, Flugasche, sowie Zement eingebracht und zu einem Bindemittelgemisch Z vermengt werden. Bei der Mischkammer kann es sich beispielsweise um eine mobile oder stationäre Mischanlage handeln. Im Unterschied zu üblichen Herstellungsverfahren wird in der Vorrichtung 1 das zur Herstellung des Frischbetons erforderliche Wassers nicht oder nur teilweise in flüssiger Form zugegeben, sondern dem Bindemittelgemisch wird ein aus Eis- oder Schneekristallen bestehender, unterkühlter Kälteträger S zugegeben, dessen Herstellung im folgenden beschrieben wird.

Zur Herstellung des Kälteträgers S werden im Ausführungsbeispiel Wasser sowie gasförmiger und flüssiger Stickstoff über entsprechende Leitungen 4,5,6 herangeführt, in einer Mischstrecke 7 zu einem Kaltgasgemisch durchmischt und einer Sprühdüse 8 zugeführt, die in einer Sprühkammer 9 angeordnet ist. Anstelle einer mehr oder weniger langen Mischstrecke können die Leitungen 4,5,6 auch unmittelbar in die Sprühdüse 8 münden, die zu diesem Zweck als Dreistoffdüse ausgebildet ist. Die Erfindung ist im übrigen nicht auf flüssigen Stickstoff als Kältemittel für die Herstellung des Kaltgasgemisches beschränkt, vielmehr können hierzu auch andere bekannte Kältemittel, insbesondere andere verflüssigte Gase herangezogen werden.

Mittels der Sprühdüse 8 wird das Kaltgasgemisch in Form eines in das Innere der Sprühkammer 9 gerichteten Kaltgasstrahls ausgebracht, wobei der Kaltgasstrahl in eine Rotation um die eigene Achse versetzt wird, um den Strahlweg zu verlängern. Durch den Eintrag des Kaltgasstrahls bildet sich im Innern der Sprühkammer 9 bereits nach kurzer Zeit eine unterkühlte Atmosphäre aus. Das im Kaltgasstrahl enthaltene Wasser gefriert und geht im Innern der Sprühkammer 9 als Schnee oder in Form feiner Eiskristalle nieder, dem Kälteträger S. Die kalte, inerte Atmosphäre im Innern der Sprühkammer 9 begünstigt dabei das Ausbilden von Kristallen mit großer Oberfläche und kleinem spezifischen Gewicht. Größe, Konsistenz und Temperatur der Kristalle werden dabei insbesondere durch das Mischungsverhältnis aus gasförmigem und flüssigem Stickstoff sowie Wasser im Kaltgasgemisch bestimmt. Bei dem so hergestellten Kälteträger handelt es sich um kleine poröse Eiskügelchen mit einer großen Oberfläche.

Neben dem hier beschriebenen Verfahren zu Herstellung des Kälteträgers können im Rahmen der Erfindung auch andere Verfahren zur Eis- oder Schneeherstellung eingesetzt werden. Beispielhaft sei hier das in der WO 98/03828 beschriebene Verfahren genannt.

Um ein Verkleben der Eis- oder Schneekristalle nach ihrer Herstellung zu verhindern, werden sie einem Verfahren zur Separation unterzogen, mittels dessen Schnee- oder Eispartikel mit einem Durchmesser unterhalb einer gewünschten Größenordnung von miteinander verklebten oder zu groß geratenen Ein- oder Schneepartikeln getrennt werden können. Zur Durchführung eines solchen Verfahrens können mechanische Vorrichtungen, wie etwa ein Sieb, ein Zyklonabscheider, ein Sichter oder ein Vibrator eingesetzt werden, wobei stets darauf geachtet werden muss, dass sich die Schnee- bzw. Eiskristalle in einem unterkühlten Zustand befinden. Bei einer Temperatur unterhalb von ca. -40°C ist gewährleistet, dass sich auf der Oberfläche der Schnee- bzw. Eiskristalle keine mikroskopischen Domänen verflüssigten Wassers vorhanden sind, die ein Verkleben der Schnee- bzw. Eiskristalle begünstigen können.

In dem in der Zeichnung gezeigten Ausführungsbeispiel erfolgt die Separation der Schnee- oder Eiskristalle dadurch, dass die Schnee- oder Eiskristalle einem Windkanal 10 zugeführt werden, in dem sie einem Kaltgasstrom, beispielsweise aus gasförmigem Stickstoff ausgesetzt werden. Der Kaltgasstrom, der in einem Gebläse 11 erzeugt wird, weist dabei eine Temperatur von T<< minus 40°C auf. Durch die starke trockenkalte Gasströmung im Innern des Windkanals 10 werden die Eisteilchen klassiert, etwaig vorhandene Flüssigwasserdomänen auf den Oberflächen der Kristalle getrocknet bzw. gefroren und etwaig bereits ganz oder teilweise zusammenhaftende Eis- oder Schneepartikel voneinander getrennt. Anstelle von gasförmigem Stickstoff können zur Erzeugung des Kaltgasstroms auch andere, trockenkalte Gase eingesetzt werden.

Die in der Sprühkammer 9 gebildeten Schnee- bzw. Eiskristalle werden, sofern sie eine vorgegebenen Größe nicht überschreiten, einer Nachkühleinrichtung 13 zugeführt, in der sie weiter gekühlt werden. Die übrigen Schnee- bzw. Eisteilchen werden über eine Ableitung 12 abgeführt. Die Nachkühleinrichtung 13 besteht aus einer Kühlkammer 14 für das zu kühlende Gut, die mit einem Kälteträger in thermischen Kontakt steht. Als Kälteträger kommt dabei vorzugsweise ein verflüssigtes Gas, etwa verflüssigte Luft oder flüssiger Stickstoff, zum Einsatz. Wird die Nachkühleinrichtung 13 mit flüssigem Stickstoff als Kälteträger betrieben, können Temperaturen bis hinab zu -190°C erzielt werden. Bei Temperaturen unter -40°C lässt sich nicht nur ein erneutes Verkleben der Schnee- oder Eiskristalle zuverlässig unterbinden sondern die Kälteübertragung von den Schnee- oder Eiskristallen an das Bindemittelgemisch Z erfolgt verzögert, da sich beim Kontakt zwischen den Schnee- oder Eiskristallen auf deren Oberfläche erst ein als Kältebrücke dienender Wasserfilm ausbildet. Auf diese Weise erfolgt eine besonders schonende Übertragung der Kälte auf das Bindemittelgemisch Z.

Die Nachkühleinrichtung 13 kann der Sprühkammer 9 auch unmittelbar nachgeschaltet werden, also vor der Zuführung der Eis- bzw. Schneekristalle an den Windkanal 10. Es ist auch im Rahmen der Erfindung vorstellbar, den Windkanal 10 in die Nachkühleinrichtung 13 zu integrieren, um die Schnee-Eiskristalle bis zur Zuführung an die Zugabestoffe des Bindemittelgemischs Z zuverlässig auf tiefe Temperaturen unterhalb von minus 40°C zu bringen oder auf diesen Temperaturen zu halten.

Der gekühlte Kälteträger S wird über eine Zuführleitung 16 der Mischkammer 2 zugeführt und dort in bekannter Weise mit Zugabestoffen und mit Zement zu Frischbeton gemischt.

Die große Oberfläche der Schnee- bzw. Eiskristalle des Kälteträgers S, sowie die durch die Vereinzelung der Schnee- bzw. Eiskristalle geschaffene Möglichkeit, den Wasseranteil sehr fein und homogen im Bindemittelgemisch zu verteilen, ermöglicht eine effektive Aufnahme der beim Abbindevorgang des Zements entstehenden Prozesswärme. Auf diese Weise werden starke Temperaturgradienten im Innern des abbindenden Betons wirksam vermieden. Durch Variation von Temperatur und Menge des eingesetzten Kälteträgers S können Frischbetontemperaturen von bis hinab zu 0°C erzielt werden.

Eine elektronische Steuerung 18 ermöglicht die Herstellung des Kälteträgers S bzw. Frischbetons nach einem vorgegebenen Programm. Die elektronische Steuerung 18 ist mit ansteuerbaren Ventilen 19,20,21, beispielsweise Magnetventilen, in den Leitungen 4,5,6 datenverbunden, mittels derer das Mischungsverhältnis und/oder der jeweilige Druck in den Leitungen 4,5,6 eingestellt werden kann. Die elektronische Steuerung 18 kann zudem über eine Steuerleitung 22 die Gebläsestärke des Gebläses 11 ansteuern. Hierdurch wird die Maximalgröße der aus dem Windkanal 10 der Nachkühleinrichtung 13 zugeführten Schnee- bzw. Eiskristalle beeinflusst. Mittels der elektronischen Steuerung lässt sich auch die Temperatur in der Nachkühleinrichtung 13 über eine Steuerleitung 23 regeln. Gleichfalls kann die Zufuhr des gasförmigen Stickstoffs an das Gebläse 11 über ein Ventil 24 angesteuert werden. Die Zuführung 16 des Kälteträgers S zur Mischkammer 2 ist gleichfalls mit einem Magnetventil 25 ausgerüstet, das von der Steuerung 18 angesteuert werden kann. Auf diese Weise kann die Temperatur, Konsistenz und Menge des dem Bindemittelgemisch Z zugeführten Kälteträgers S genau und zuverlässig eingestellt und beispielsweise so gewählt werden, dass der erzeugte Frischbeton einen gewissen Temperaturwert, beispielsweise 0°C aufweist. Um den vorgegebenen Temperaturwert während der Dauer der Herstellung einer Betonmenge einzuhalten, wird die mittels eines geeigneten Messgeräts kontinuierlich oder regelmäßig gemessene Temperatur des Frischbetons als Stellgröße eingeführt, auf die durch die Einstellung der Temperatur des zugeführten Kälteträgers S hin laufend geregelt wird.

Das erfindungsgemäße Verfahren ermöglicht die Umwandlung des Zugabewassers in Kälteträger S innerhalb weniger Minuten. Infolge der großen Oberfläche der vereinzelten Schnee- bzw. Eiskristalle erfolgt die Kälteübertragung beim Nachkühlen sehr effektiv, so dass auch dieser Vorgang nur wenige Minuten in Anspruch nimmt.

Auch wenn das Ausführungsbeispiel eine Vorrichtung zur Betonherstellung beschreibt, so ist die Erfindung nicht hierauf beschränkt; vielmehr kann das erfindungsgemäße Verfahren überall dort zum Einsatz kommen, wo eine effektive Kühlung mittels Eis- oder Schneekristallen verlangt ist, beispielsweise im Bereich der Pharmazie oder der Lebensmitteltechnik.

### Bezugszeichenliste

- 1.: Vorrichtung
- 2.: Mischkammer
- 3.: -
- 4.: Leitung
- 5.: Leitung
- 6.: Leitung
- 7.: Mischstrecke
- 8.: Sprühdüse
- 9.: Sprühkammer
- 10.: Windkanal
- 11.: Gebläse
- 12.: Ableitung
- 13.: Nachkühleinrichtung
- 14.: Kühlkammer
- 15.: -
- 16.: Zuführleitung
- 17.: -
- 18.: elektronische Steuerung
- 19.: Ventil
- 20.: Ventil
- 21.: Ventil
- 22.: Steuerleitung
- 23.: Steuerleitung
- 24.: Ventil
- 25.: Magnetventil
- S: Kälteträger
- Z: Bindemittelgemisch

## Patentansprüche

1. Verfahren zum Kühlen von Stoffgemischen, bei dem ein Ausgangsstoff, etwa ein pharmazeutischer Wirkstoff oder Zement, mit Zuschlagstoffen zu einem Stoffgemisch (Z) vermengt und durch Zugabe von Wasser an das Stoffgemisch (Z) ein Produkt, beispielsweise Frischbeton, hergestellt wird, wobei das Wasser dem Stoffgemisch (Z) zumindest zum Teil in Form eines aus Schnee- und/oder Eiskristallen bestehenden Kälteträgers (S) zugeführt wird,
**dadurch gekennzeichnet,**
**dass** die Schnee- und/oder Eiskristalle des Kälteträgers (S) nach ihrer Erzeugung auf eine Temperatur von unter minus 40°C unterkühlt und einem Verfahren zur Vereinzelung unterzogen werden.

2. Verfahren nach Anspruch 1, **dadurch gekennzeichnet, dass** die Schnee- und/oder Eiskristalle des Kälteträgers (S) bis zur Zufuhrung an das Stoffgemisch (Z) auf eine vorgegebene Temperatur von unterhalb von minus 40°C gebracht oder gehalten werden.

3. Verfahren nach Anspruch 1 oder 2, **dadurch gekennzeichnet, dass** die Schnee- und/oder Eiskristalle des Kälteträgers (S) zur Vereinzelung einem Kaltgasstrom zugeführt werden.

4. Verfahren nach Anspruch 3, **dadurch gekennzeichnet, dass** die Temperatur des Kaltgasstroms in Abhängigkeit von der Temperatur der Schnee- und/oder Eiskristalle des Kälteträgers (S) einstellbar ist.

5. Verfahren nach einem der vorhergehenden Ansprüche, **dadurch gekennzeichnet, dass** die Schnee- und/oder Eiskristalle des Kälteträgers (S) zur Vereinzelung einer mechanischen Separiereinrichtung, etwa einem Vibrator, einem Zyklon, einem Sichter oder einem Sieb, zugeführt werden.

6. Verfahren nach einem der vorhergehenden Ansprüche, **dadurch gekennzeichnet, dass** zur Herstellung der Schnee- und/oder Eiskristalle des Kälteträgers (S)
- Wasser mit einem Treibgas, etwa Stickstoff oder Luft, sowie einem Kühlmittel zu einem Kaltgasgemisch vermischt wird,
- das Kaltgasgemisch als Kaltgasstrahl in eine Sprühkammer (9) eingesprüht wird, wobei das Wasser zu Schnee- und/oder Eiskristallen gefriert.

7. Verfahren nach einem der vorhergehenden Ansprüche, **dadurch gekennzeichnet, dass** zur Herstellung der Schnee- und/oder Eiskristalle des Kälteträgers (S) Wasser in ein Bad mit einem flüssigen Kühlmittel eingesprüht wird, wobei das Wasser zu Schnee- und/oder Eiskristallen gefriert.

8. Verfahren nach einem der vorhergehenden Ansprüche, **dadurch gekennzeichnet, dass** zur Unterkühlung des Kälteträgers (S) ein tiefkaltes, verflüssigtes Gas, etwa verflüssigter Stickstoff oder verflüssigtes Kohlendioxid eingesetzt wird.

9. Vorrichtung zum Kühlen von Stoffgemischen,
- mit einer Einrichtung zum Herstellen eines aus Schnee- und/oder Eiskristallen gebildeten Kälteträgers (S),
- mit einer Einrichtung zur Vereinzelung der Schnee- und/oder Eiskristalle des Kälteträgers (S); und
- mit einer Mischkammer (2), in der die vereinzelten und unterkühlten Schnee- und/oder Eiskristalle des Kälteträgers (S) mit einem Stoffgemisch (Z) zu einem Produkt vermengbar sind, **dadurch gekennzeichnet, dass** eine Nachkühleinrichtung (13) zur Unterkühlung der Schnee- und Eiskristalle des Kälteträgers auf eine Temperatur von unter minus 40°C ausgebildet ist.

10. Vorrichtung nach Anspruch 9, **dadurch gekennzeichnet, dass** die Vorrichtung zur Vereinzelung der Schnee- und/oder Eiskristalle des Kälteträgers (S) eine Kaltgasstrom-Erzeugungseinrichtung (11) umfasst.

11. Vorrichtung nach Anspruch 9 oder 10, **dadurch gekennzeichnet, dass** die Vorrichtung zur Vereinzelung der Schnee- und/oder Eiskristalle des Kälteträgers (S) eine mechanische Separieranlage, beispielsweise einen Vibrator, ein Zyklon oder ein Sieb, umfasst.

## Claims

1. Method for cooling mixtures of substances, in which an initial substance, for example a pharmaceutical active substance or cement, is blended with aggregates to form a substance mixture (Z) and a product, for example fresh concrete, is produced by the addition of water to the substance mixture (Z), the water being supplied to the substance mixture (Z) at least partially in the form of a cold transfer medium (S) consisting of snow crystals and/or ice crystals, **characterized in that** the snow crystals and/or ice crystals of the cold transfer medium (S), after being generated, are subcooled to a temperature of below -40°C and are subjected to a singling-out method.

2. Method according to Claim 1, **characterized in that** the snow crystals and/or ice crystals of the cold transfer medium (S) are brought to or held at a stipulated temperature of below -40°C until they are supplied to the substance mixture (Z).

3. Method according to Claim 1 or 2, **characterized in that** the snow crystals and/or ice crystals of the cold transfer medium (S) are supplied to a cold-gas stream in order to be singled out.

4. Method according to Claim 3, **characterized in that** the temperature of the cold-gas stream can be set as a function of the temperature of the snow crystals and/or ice crystals of the cold transfer medium (S).

5. Method according to one of the preceding claims, **characterized in that** the snow crystals and/or ice crystals of the cold transfer medium (S) are supplied for singling-out to a mechanical separating device, for example a vibrator, cyclone, sifter or screen.

6. Method according to one of the preceding claims, **characterized in that**, to produce the snow crystals and/or ice crystals of the cold transfer medium (S),
- water is mixed with a propellant gas, for example nitrogen or air, and a coolant to form a cold-gas mixture,
- the cold-gas mixture is sprayed as a cold-gas jet into a spray chamber (9), the water freezing into snow crystals and/or ice crystals.

7. Method according to one of the preceding claims, **characterized in that**, to produce the snow crystals and/or ice crystals of the cold transfer medium (S), water is sprayed into a bath having a liquid coolant, the water freezing to snow crystals and/or ice crystals.

8. Method according to one of the preceding claims, **characterized in that**, for the subcooling of the cold transfer medium (S), a low-temperature liquefied gas, for example liquefied nitrogen or liquefied carbon dioxide, is used.

9. Device for cooling mixtures of substances,
- with an arrangement for producing a cold transfer medium (S) formed from snow crystals and/or ice crystals,
- with an arrangement for singling out the snow crystals and/or ice crystals of the cold transfer medium (S), and
- with a mixing chamber (2) in which the singled-out and subcooled snow crystals and/or ice crystals of the cold transfer medium (S) can be blended with a substance mixture (Z) to form a product, **characterized in that**
an aftercooling arrangement (13) for subcooling the snow crystals and/or ice crystals of the cold transfer medium to a temperature of below -40°C is formed.

10. Device according to Claim 9, **characterized in that** the device for singling out the snow crystals and/or ice crystals of the cold transfer medium (S) comprises a cold-gas stream generation arrangement (11).

11. Device according to Claim 9 or 10, **characterized in that** the device for singling out the snow crystals and/or ice crystals of the cold transfer medium (S) comprises a mechanical separating plant, for example a vibrator, cyclone or screen.

## Revendications

1. Procédé de refroidissement de mélanges de matières dans lequel une substance de départ, par exemple une substance pharmaceutiquement active ou un ciment, est mélangée avec des additifs pour former un mélange (Z) de matières et un produit, par exemple du béton frais, est formé par addition d'eau au mélange (Z) de matières, au moins une partie de l'eau étant apportée au mélange (Z) de matières sous la forme d'un fluide frigorifique (S) constitué de cristaux de neige et/ou de cristaux de glace,
**caractérisé en ce que**
les cristaux de neige et/ou les cristaux de glace du fluide frigorifique (S) sont sous-refroidis à une température inférieure à moins 40°C après leur formation et subissent une opération de fractionnement.

2. Procédé selon la revendication 1, **caractérisé en ce que** les cristaux de neige et/ou les cristaux de glace du fluide frigorifique (S) sont amenés ou maintenus à une température prédéterminée inférieure à moins 40°C avant d'être amenés au mélange (Z) de matières.

3. Procédé selon les revendications 1 ou 2, **caractérisé en ce que** pour être fractionnés, les cristaux de neige et/ou les cristaux de glace du fluide frigorifique (S) sont apportés dans un écoulement de gaz froid.

4. Procédé selon la revendication 3, **caractérisé en ce que** la température de l'écoulement de gaz froid peut être ajustée en fonction de la température des cristaux de neige et/ou des cristaux de glace du fluide frigorifique (S).

5. Procédé selon l'une des revendications précédentes, **caractérisé en ce que** pour être fractionnés, les cristaux de neige et/ou les cristaux de glace du fluide frigorifique (S) sont amenés dans un dispositif mécanique de séparation, par exemple un vibreur, un cyclone, un tamis ou un filtre.

6. Procédé selon l'une des revendications précédentes, **caractérisé en ce que** pour préparer les cristaux de neige et/ou les cristaux de glace du fluide frigorifique (S) :
- de l'eau est mélangée avec un gaz propulseur, par exemple de l'azote ou de l'air, ainsi qu'avec un fluide de refroidissement pour former un mélange de gaz froid,
- le mélange de gaz froids est injecté sous la forme d'un jet de gaz froids dans une chambre de pulvérisation (9), l'eau étant congelée en cristaux de neige et/ou en cristaux de glace.

7. Procédé selon l'une des revendications précédentes, **caractérisé en ce que** pour préparer les cristaux de neige et/ou les cristaux de glace du fluide frigorifique (S), de l'eau est injectée dans un bain en même temps qu'un agent liquide de refroidissement, l'eau étant congelée en cristaux de neige et/ou en cristaux de glace.

8. Procédé selon l'une des revendications précédentes, **caractérisé en ce que** pour sous-refroidir le fluide frigorifique (S), on utilise un gaz liquéfié par refroidissement, par exemple de l'azote liquéfié ou du dioxyde de carbone liquéfié.

9. Système de refroidissement de mélanges de matières, présentant
- un dispositif de préparation d'un fluide frigorifique (S) formé de cristaux de neige et/ou de cristaux de glace,
- un dispositif de fractionnement des cristaux de neige et/ou de cristaux de glace du fluide frigorifique (S) et
- une chambre de mélange (2) dans laquelle les cristaux de neige et/ou les cristaux de glace fractionnés et sous-refroidis du fluide frigorifique (S) peuvent être mélangés avec un mélange (Z) de matières pour fournir un produit,
**caractérisé en ce que**
le système présente un dispositif (13) de refroidissement final qui sous-refroidit les cristaux de neige et de glace du fluide frigorifique à une température inférieure à moins 40°C est formé.

10. Système selon la revendication 9, **caractérisé en ce que** le système comporte un dispositif (11) de formation d'un écoulement de gaz froids pour fractionner les cristaux de neige et/ou les cristaux de glace du fluide frigorifique (S).

11. Système selon les revendications 9 ou 10, **caractérisé en ce que** le système de fractionnement des cristaux de neige et/ou des cristaux de glace du fluide frigorifique (S) comporte une installation de séparation mécanique, par exemple un vibreur, un cyclone ou un tamis.
